# EUROPEAN PATENT SPECIFICATION

(11) **EP 3 998 041 B1**
(45) Date of publication and mention of the grant of the patent: **14.02.2024**
(21) Application number: 20840169.5
(22) Date of filing: 09.07.2020
(51) Int. Cl.: A61C 19/04, G01B 11/24, A61C 9/00

(54) **DENTURE SUPPORT MECHANISM, THREE-DIMENSIONAL DENTURE SCANNER, AND CONTROL METHOD THEREOF**
PROTHESENSTÜTZMECHANISMUS, DREIDIMENSIONALER GEBISSSCANNER UND STEUERVERFAHREN DAFÜR
MÉCANISME DE SUPPORT DE PROTHÈSE DENTAIRE, SCANNER DE PROTHÈSE DENTAIRE TRIDIMENSIONNEL ET SON PROCÉDÉ DE COMMANDE

(30) Priority: 12.07.2019 CN 201910628801
(43) Date of publication of application: 18.05.2022
(73) Proprietor: Shining 3D Tech Co., Ltd., Hangzhou, Zhejiang 311258 (CN)
(72) Inventor: ZENG, Guirong, Hangzhou, Zhejiang 311258 (CN); ZHANG, Wei, Hangzhou, Zhejiang 311258 (CN); JIANG, Jianfu, Hangzhou, Zhejiang 311258 (CN); FENG, Hailong, Hangzhou, Zhejiang 311258 (CN); XU, Jiaji, Hangzhou, Zhejiang 311258 (CN); CHEN, Yiju, Hangzhou, Zhejiang 311258 (CN)
(74) Representative: Grünecker Patent- und Rechtsanwälte PartG mbB
(86) International application number: PCT/CN2020/101089
(87) International publication number: WO 2021/008436

(56) References cited:
- EP-A1- 1 609 437
- CN-A- 102 038 557
- CN-A- 106 907 990
- CN-U- 204 286 377
- CN-U- 207 696 027
- CN-U- 208 942 466
- DE-A1- 19 827 788
- JP-A- 2003 075 139
- KR-B1- 101 669 818
- US-A1- 2004 032 594
- US-A1- 2004 032 594
- US-A1- 2011 090 513
- US-A1- 2011 262 885

## Description

### Technical Field

The present invention relates to the technical field of denture scanning equipment, in particular to a denture bearing mechanism, a denture three-dimensional scanner and a control method of the denture three-dimensional scanner.

### Background

A denture three-dimensional scanner is applied to the dental industry, during scanning, a denture model is placed on an objective table, the denture model on the objective table is scanned by a three-dimensional surface scanning technology, a denture three-dimensional model is obtained, and the denture three-dimensional scanner is widely applied to the field of dental restoration and orthodontic treatment. A denture three-dimensional scanner known to inventors can only scan one denture model each time, an operation of replacing the denture model is tedious, consumed time is long, efficiency is low, and cost is high.

US 20110090513A1 discloses a scanning device for scanning dental objects, wherein an optical scanning system is attached to a mounting structure, and dental objects are attached to one or more holding devices provided on a rotatable plate that is mounted on a base plate, the displacement of which may be controlled by one or more step motors. Direct electric contact between the holding device and external control, as well as an electric contact assembly in the base plate, are not disclosed in the patent application.

US 20110262885A1 discloses a surface mapping device, wherein a number of measuring pots for single teeth are mounted to a rotating plate and transported to the laser measuring setup. The rotating plate is driven mechanically by a friction wheel, the front of which is pressed against the rotating plate by means of a spring plate.

### Summary

The invention is defined by the appended claims.

The first technical problem to be solved by an embodiment of the present invention is to provide a denture bearing mechanism capable of efficiently and rapidly scanning more than one denture model at the same time aiming at the current situation in an art known to inventors.

The second technical problem to be solved by an embodiment of the present invention is to provide a denture three-dimensional scanner capable of efficiently and rapidly scanning more than one denture model at the same time aiming at the current situation in an art known to inventors.

The third technical problem to be solved by the present invention is to provide a control method of the denture three-dimensional scanner aiming at the current situation in an art known to inventors.

The technical solution adopted to solve the first technical problem in an embodiment of the present invention includes that: a denture bearing mechanism, including a fixed seat, a bearing table and a driving assembly, the fixed seat is detachably mounted on a storage table of the denture three-dimensional scanner, the bearing table is arranged on the fixed seat and connected with the driving assemblies, the driving assemblies are used for driving the bearing table to move relative to the fixed seat, and the bearing table is provided with at least two scanning stations used for placing denture models.

In some embodiments, the driving assemblies include a first driving assembly, and the first driving assembly is capable of driving the bearing table to rotate relative to the fixed seat, so as to adjust a position of each of the at least two scanning stations.

In some embodiments, the at least two scanning stations are respectively distributed at intervals in a circumferential direction along a rotating axis of the bearing table.

In some embodiments, a rotatable locking structure is provided between the fixed seat and each scanning station.

In some embodiments, the rotatable locking structure includes an elastic positioning piece and a recessed hole, wherein the elastic positioning piece is axially telescopically located on one of the fixed seat and the at least two scanning stations, the recessed hole is correspondingly provided in the other one of the fixed seat and the at least two scanning stations, when the elastic positioning piece is in an elongated state and located in the recessed hole, the scanning stations and the fixed seat are locked, when the elastic positioning piece is in a compressed state and separated from the recessed hole, locking is released, and the scanning stations is rotatable relative to the fixed seat.

In some embodiments, the first driving assembly includes a first driving piece, a first transmission wheel, a second transmission wheel, a transmission belt and a rotating shaft, the first driving piece is connected with the first transmission wheel, the transmission belt is connected between the first transmission wheel and the second transmission wheel, the second transmission wheel is in a transmission connection to the bearing table through the rotating shaft, and the rotating shaft is sleeved with a bearing and a number of the bearing is one or two.

In some embodiments, the driving assemblies further comprise a second driving assembly, and the second driving assembly is configured to drive the bearing table to horizontally move in a reciprocation manner relative to the fixed seat, so as to adjust a position of each of the at least two scanning stations.

In some embodiments, the at least two scanning stations are distributed at intervals in a horizontal movement direction.

In some embodiments, the second driving assembly includes a second driving piece, a lead screw and a nut, the second driving piece is connected with the lead screw, and the nut penetrates out of the lead screw and is fixed to the bearing table.

In some embodiments, a first limiting switch and a second limiting switch are respectively provided at two ends of the fixed seat, the first limiting switch and the second limiting switch are respectively electrically connected with the second driving assembly, and a photoelectric blocking plate is fixed on the nut.

In some embodiments, an electric contact assembly is provided in the fixed seat, and the driving assemblies are electrically connected to an external controller through the electric contact assembly, so that each scanning station is subjected to switching control.

In some embodiments, an end face, which is away from the fixed seat, of each scanning station is connected with an external denture base in a concave-convex matching and/or magnetic attraction manner; or a side face of each scanning station is provided with a guide groove or a guide rib which is matched with an external denture base rib groove; or an end face, which is away from the fixed seat, of each scanning station is connected with ane external denture base in a concave-convex matching and/or magnetic attraction manner; and a side face of each scanning station is provided with a guide groove or a guide rib matched with an external denture base rib groove.

The technical solution adopted to solve the second technical problem in some embodiments of the present invention includes that: provided is a denture three-dimensional scanner, including a storage table, a controller and a scanning device arranged above the storage table, and further including the above denture bearing mechanism, where the fixed seat of the denture bearing mechanism is detachably mounted on the storage table, the bearing table is arranged on the fixed seat and is provided with the at least two scanning stations used for placing denture models, an electric contact assembly is provided in the fixed seat, the driving assemblies are electrically connected to the controller through the electric contact assembly, so that each scanning stations is subjected to switching control.

The technical solution adopted to solve the third technical problem in some embodiments of the present invention includes that: provided is a control method of the denture three-dimensional scanner, applied to the above denture three-dimensional scanner, and including the following steps: acquiring position information of a scanning station corresponding to the scanning device and transmitting position information to the controller; controlling the scanning device by the controller to scan a to-be-scanned piece on the scanning station, and transmitting feedback information to the controller after scanning is completed; and controlling driving pieces according to feedback information, and controlling the driving pieces to drive the bearing table to rotate at a preset angle or move by a preset distance by the controller so as to switch over the scanning stations.

Compared with the art known to inventors, the denture bearing mechanism, the denture three-dimensional scanner and the control method thereof, provided by the present invention, can achieve uninterrupted scanning of two or more denture models, the scanning efficiency is remarkably improved, and the time for replacing the denture models is saved.

### Brief Description of the Drawings

FIG. 1 is a schematic stereochemical structural diagram of a denture bearing mechanism provided by an embodiments of the present invention;
FIG. 2 is a schematic structural diagram of the denture bearing mechanism as shown in FIG. 1 at a first perspective.
FIG. 3 is a schematic structural diagram of the denture bearing mechanism as shown in FIG. 1 at a second perspective.
FIG. 4 is a schematic structural diagram of one end face of a fixed seat of the denture bearing mechanism as shown in FIG. 1;
FIG. 5 is a schematic structural diagram of the denture bearing mechanism without a bearing table as shown in FIG. 2;
FIG. 6 is a schematic structural diagram of one end face of the bearing table of the denture bearing mechanism as shown in FIG. 1;
FIG. 7 is a schematic structural diagram of another end face of the bearing table of the denture bearing mechanism as shown in FIG. 1;
FIG. 8 is a schematic structural diagram of the denture bearing mechanism as shown in FIG. 1 at a third perspective;
FIG. 9 is a schematic stereochemical structural diagram of a denture three-dimensional scanner provided by an embodiment of the present invention;
FIG. 10 is a schematic stereochemical structural diagram of the denture bearing mechanism provided by another embodiment of the present invention;
FIG. 11 is a schematic structural diagram of the denture bearing mechanism as shown in FIG. 10 at a first perspective;
FIG. 12 is a schematic structural diagram of the denture bearing mechanism as shown in FIG. 10 at a second perspective;
FIG. 13 is a schematic structural diagram of the denture bearing mechanism as shown in FIG. 10 at a third perspective;
FIG. 14 is a sectional view of the denture bearing structure as shown in FIG. 13 along an A-A direction;
FIG. 15 is a schematic structural diagram of one end face of the fixed seat of the denture bearing mechanism as shown in FIG. 10;
FIG. 16 is a schematic stereochemical structural diagram of a denture three-dimensional scanner provided by another embodiment of the present invention; and
FIG. 17 is a schematic diagram of a control method of the denture three-dimensional scanner provided by another embodiment of the present invention.

Reference numerals:
100, denture bearing mechanism; 10, fixed seat; 11, accommodating hole; 12,elastic positioning piece; 13, electric contact assembly; 14, first accommodating groove; 15, second accommodating groove; 151, guide track; 152, sliding block; 20, bearing table; 21, scanning station; 211, recessed hole; 212, guide groove; 213, positioning portion; 214, magnetic unit; 30, driving assembly; 31, driving piece; 32, first transmission wheel; 33, second transmission wheel; 34,transmission belt; 35, rotating shaft; 36, bearing; 40, driving assembly; 41, driving piece; 42, lead screw; 43, nut; 51, first limiting switch; 52, second limiting switch; 53, photoelectric blocking plate; 200, denture three-dimensional scanner; 201, storage table; and 202, scanning device.

### Detailed Description of the Embodiments

It should be noted that when one assembly is referred to as being "connected" to another element, it can be directly connected to and integrated with the other element or an intermediate assembly may exist at the same time. When an assembly is considered to be "fixed" to another component, the assembly may be directly fixed on the other assembly or there may be an intermediate assembly at the same time.

Unless otherwise defined, all technical and scientific terms used herein are the same as meanings of general understandings of those skilled in the art of the invention. The terms used in the specification of the invention herein are only for the purpose of describing specific embodiments, but are not intended to limit the invention. As used herein, the term "and/ or" includes any and all combinations of one or more of the associated listed items.

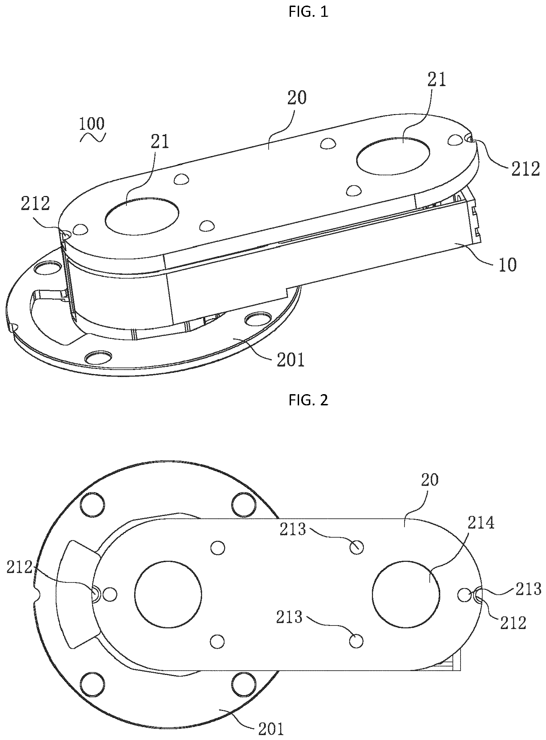

Referring to FIG. 1 to FIG. 8, an embodiment of the present invention provides a denture bearing mechanism 100, the denture bearing mechanism 100 is used for bearing a to-be-scanned piece and drives the to-be-scanned piece to move, so that a scanning system carries out multi-angle or all-directional scanning on the to-be-scanned piece, and then data support is provided for subsequent dental restoration and orthodontic treatment. In some embodiments of the present invention, the to-be-scanned piece may be a denture, a dental cast, an impression and the like, a lower portion of the to-be-scanned piece is connected to a denture base (not shown), and the denture base is generally made of an iron plate.

As shown in FIG. 1, the above denture bearing mechanism 100 includes: a fixed seat 10, a bearing table 20 and driving assemblies. The fixed seat 10 is detachably connected to a storage table 201 of a denture three-dimensional scanner 200 through a positioning structure, the bearing table 20 is arranged on the fixed seat 10 and is connected to the driving assemblies, and the bearing table 20 can move relative to the fixed seat 10 under an action of the driving assemblies, such as horizontal reciprocating sliding or rotation.

In some embodiments, the bearing table 20 is roughly oval, and is provided with two or more scanning stations 21 used for placement of denture models, a bearing face of each scanning station 21 is fixedly connected with an external denture base in a concave-convex matching and/or magnetic attraction mode, and meanwhile, a side face of each scanning station 21 is provided with a guide groove 212 or a guide rib matched with an external denture base rib groove. Compared with a traditional mode that only one denture model is scanned every time, the mode in an embodiment of the present invention has the characteristics that by arrangement of the bearing table 20, at least two denture models are scanned at a time, and the scanning efficiency is remarkably improved.

Referring to FIG. 2, in some embodiments, each scanning station 21 is provided with a positioning portion 213, the external denture base is provided with a corresponding positioning hole, the positioning portion 213 is matched with the positioning hole to achieve a circumferential fixation of each scanning station 21 and the external denture base. It may be known that in other embodiments, the position of the positioning portion 213 and the position of the positioning hole may be interchanged, and it will not be described in detail herein.

Further, at least one positioning portion 213 is arranged, in some embodiments, three positioning portions are arranged, after being connected to one another, the three positioning portions 213 are distributed on the each scanning station 21 in a mode of an equilateral triangle, and by the arrangement of the three positioning portions 213 which are distributed in the mode of an equilateral triangle, reliability and stability of installation can be improved. It may be known that the number of the positioning portions 213 is merely an example in the present example, and is not limited. Moreover, in some embodiments, the positioning portions 213 are protruded positioning steel balls, and the positioning holes are semispherical recessed holes.

In some embodiments, the positioning structure further includes a magnetic unit 214 to implement axial fixation of the scanning stations 21 and the external denture base, mounting grooves with matched numbers and sizes are respectively provided in the scanning stations 21 and the external denture base, magnets with opposite magnetisms are embedded in the mounting grooves, and when the external denture base is seated on the scanning stations 21, each scanning station 21 is magnetically connected with the external denture base by a principle of opposites attract. Specifically, one magnetic unit 214 is arranged and is located at the center of an equilateral triangle, of course, in some other embodiments, three magnetic units 214 may be arranged, after being connected, the three magnetic units 214 are also distributed in a mode of an equilateral triangle, and the three magnetic units 214 and the three positioning portions 213 are staggered from one another. The foregoing fixing mode through concave-convex matching and/or magnetic attraction not only is reliable in fixation, but also facilitates alignment, loading and unloading, and is convenient to use.

By the fixing mode of fixedly connecting the scanning stations with the external denture base through concave-convex matching and/or magnetic attraction, it can be ensured that after scanning of one denture model is completed, the denture model may be rapidly and efficiently replaced with another denture model, the replacing mode is simple and convenient, alignment and operation are facilitated, according to the mode of fixing the denture models on the scanning stations 21, axial fixation and circumferential fixation are both achieved, and the mode is reliable.

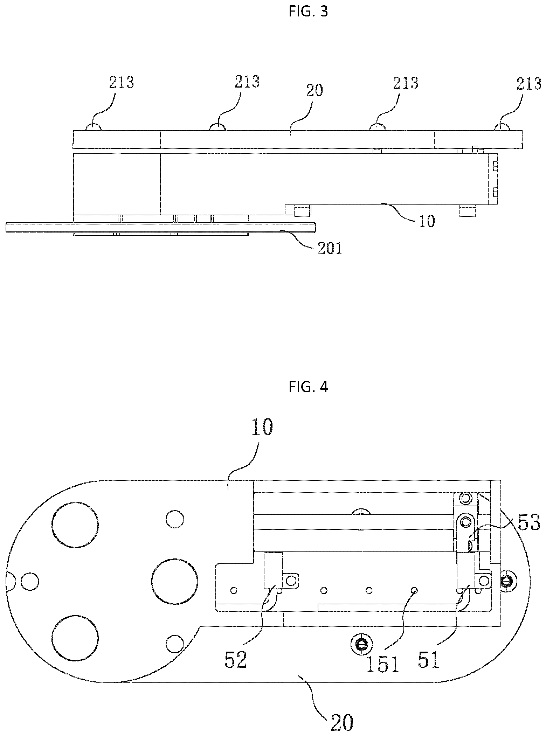

Referring to FIG. 4, the positioning structure between the fixed seat 10 and the storage table 201 may also be in concave-convex matching and/or magnetic attraction, the specific fixing mode may refer to connection between each scanning station 21 and the external denture base, and it will not be described in detail herein. Similarly, the fixing mode not only is reliable in fixation, but also facilitates alignment, loading and unloading, and is convenient to use.

In some embodiments, the bearing table 20 is driven by the second driving assembly 40 and can slide in a horizontal reciprocating manner relative to the fixed seat 10, correspondingly, more than two scanning stations 21 on the bearing table 20 are distributed at intervals in the length direction of the bearing table 20, and drive the denture models to synchronously and horizontally move, and the scanning stations 21 are successively scanned in a horizontal movement process.

In some embodiments, the above second driving assembly 40 includes a second driving piece 41 and a transmission assembly connected with the second driving piece 41, the second driving piece 41 is fixed to the fixed seat 10, an electric contact assembly 13 is provided in the fixed seat 10, the second driving piece 41 is electrically connected with a controller of an external storage table 201 through the electric contact assembly 13, the controller controls the second driving piece 41 according to setting or feedback signals, and thus, placing positions of the scanning stations 21 and the denture models located on the scanning stations are controlled. In some embodiments, the electric contact assembly 13 includes a conductive contact.

In some embodiments, the transmission assembly includes a lead screw 42 and a nut 43 engaged with the lead screw 42, the second driving piece 41 is connected with the lead screw 42, the lead screw 42 and the nut 43 form a lead screw and nut pair, and the nut 43 penetrates out of the lead screw 42 and is fixed on the bearing table 20. The nut 43 may be fixed to the bearing table 20 through a screw, and may also be fixed by modes of gluing, welding, riveting and the like.

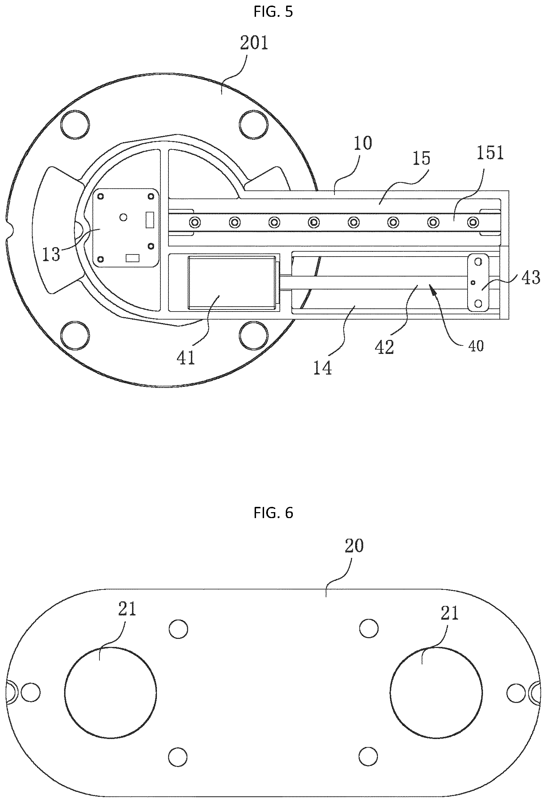

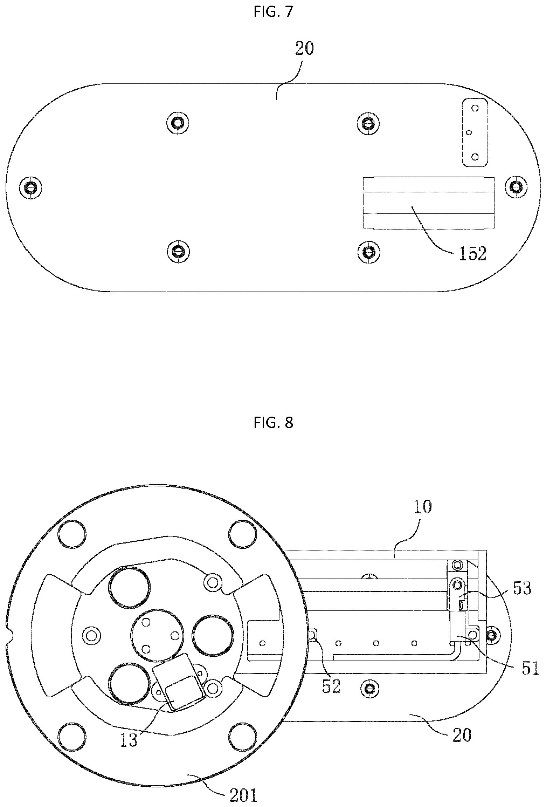

In some embodiments, as shown in FIG. 5 and FIG. 7 respectively, the fixed seat 10 is provided with a first accommodating groove 14 and a second accommodating groove 15, the second driving piece 41 is arranged in the first accommodating groove 14, a guide track 151 and a sliding block 152 connected with the guide track in a sliding manner are provided in the second accommodating groove 15, the sliding block 152 can be driven by the bearing table 20 to slide horizontally along the guide track 151, and the first accommodating groove 14 and the second accommodating groove 15 are parallel to each other.

Referring to FIG. 8, in some embodiments, a first limiting switch 51 and a second limiting switch 52 which are electrically connected with the second driving assembly 40 are respectively provided at two ends of the fixed seat 10, and a photoelectric blocking plate 53 is fixed on the nut 43. The controller controls rotation of the second driving piece 41 to achieve movement of the scanning stations 21 at any position in the horizontal direction, and the placing positions of the scanning stations 21 may be controlled according to scanning requirements. In an initial state, the scanning station 21 on one side is located at a scanning center, the photoelectric blocking plate 53 is located in a center of one limiting switch, the limiting switch is turned on and feeds back signals to the controller so as to drive the second driving piece 41 to rotate, the lead screw 42 drives the nut 43 and the bearing table 20 fixed to the nut 43 to move horizontally till the photoelectric blocking plate 53 moves to the center of the other limiting switch, at the moment, the scanning station 21 on the other side is located at the scanning center, the denture model may be replaced, in a horizontal reciprocating sliding process of the bearing table 20, scanning of the two denture models are completed, the electronic control mode does not need manual interference, and the precision is high.

It should be noted that the axial direction in the embodiments refers to the direction perpendicular to the bearing face of the bearing table 20, and description of the axial direction does not limit that the bearing table 20 is certainly regularly circular.

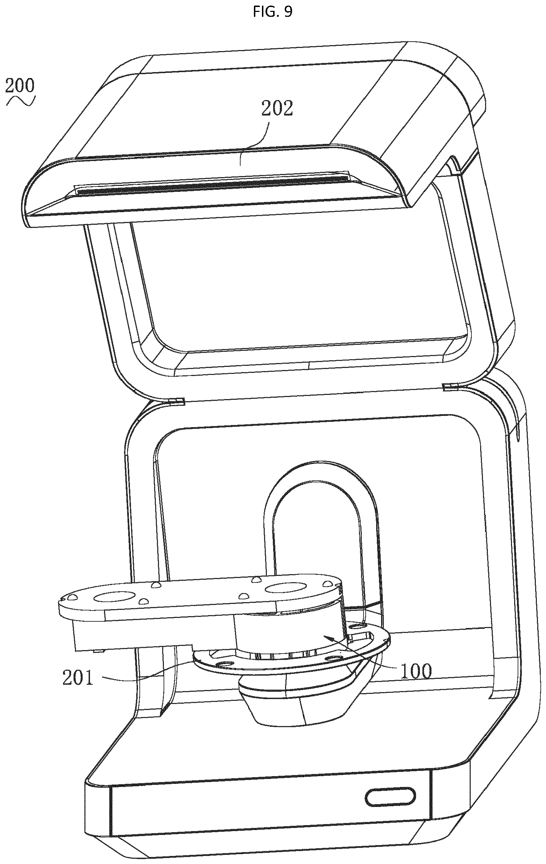

Referring to FIG. 9, the denture three-dimensional scanner 200 further includes a scanning device 202 arranged above the storage table 201, and the scanning device 202 includes a scanning head which is used for scanning the to-be-scanned piece to establish three-dimensional data and model of the to-be-scanned piece.

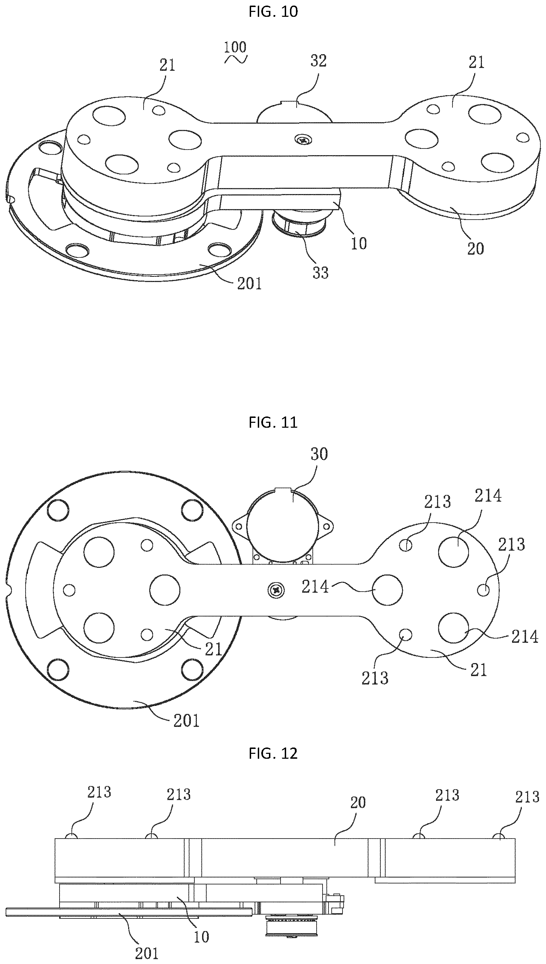

Referring to FIG. 10 to FIG. 15, some embodiments of the present invention provide a denture bearing mechanism 100, the bearing table 20 of the denture bearing mechanism 100 is driven by the first driving assembly 30 to be capable of rotating relative to the fixed seat 10 at a preset angle, more than two scanning stations 21 are distributed at intervals in the circumferential direction along the rotating axis of the bearing table 20, and the bearing table 20 may be oval, circular, square, dumbbell-shaped or in the shape of a dumbbell with more than three branches. As shown in FIG. 10, in some embodiments, the bearing table 20 is provided with two scanning stations 21, the bearing table 20 is of dumbbell-shaped correspondingly, it can be known that three, four or more scanning stations 21 are arranged, correspondingly, the bearing table 20 may be in the shape of a dumbbell with three branches, in the shape of a dumbbell with four branches, square or circular, and as long as the bearing table can bear the denture models respectively, the shape of the bearing table is not limited.

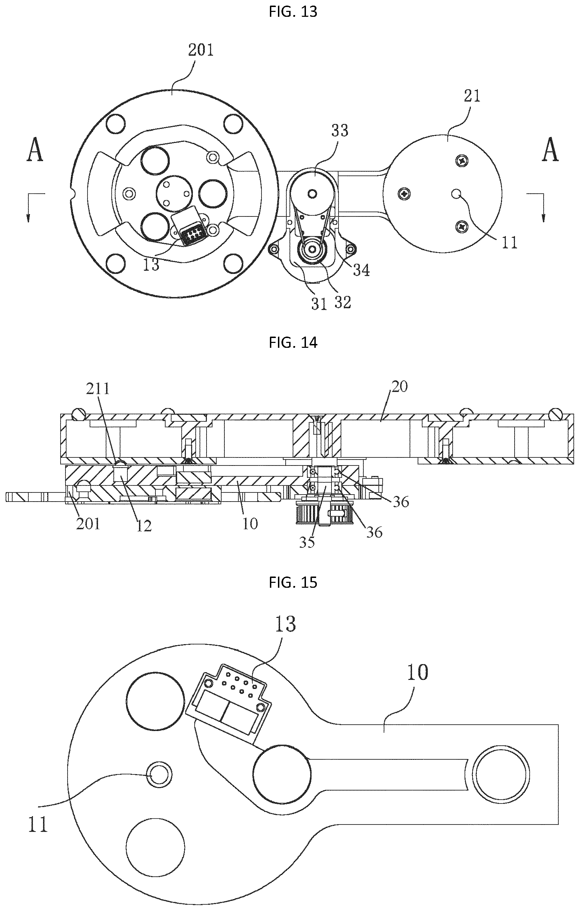

Referring to FIG. 13, in some embodiments, the first driving assembly 30 includes a first driving piece 31, a first transmission wheel 32, a second transmission wheel 33 and a transmission belt 34 connected between the first transmission wheel 32 and the second transmission wheel 33, the first transmission wheel 32 is connected with the first driving piece 31, and the second transmission wheel 33 is in transmission connection to the bearing table 20 through a rotating shaft 35.

The first transmission wheel 32 is driven by the first driving piece 31 to rotate, thus, the second transmission wheel 33 connected with the first transmission wheel is driven to rotate, owing to rotation of the second transmission wheel 33, the bearing table 20 is driven to rotate, and then the first driving piece 31 drives the bearing table 20 to rotate by a belt transmission mode.

In an embodiment of the present invention, the radius of the first transmission wheel 32 is smaller than that of the second transmission wheel 33, that is, the rotating speed of the first transmission wheel 32 is greater than that of the second transmission wheel 33, at the moment, the belt transmission mode represents speed reducing transmission on the first driving piece 31, namely, belt transmission has a function of a speed reducer at the moment. By the speed reducing effect of belt transmission, high-speed rotation of the first driving piece 31 is converted into low-speed rotation of the bearing table 20, moreover, driving torsion of the bearing table 20 is increased, thus, the bearing table 20 can stably drive the denture models to rotate, the rotating speed is matched with the scanning speed, and the problem that normal scanning is interfered due to too high rotating speed of the bearing table 20 is avoided. Of course, in another embodiment, the bearing table 20 may also drive the bearing table 20 to rotate by other transmission modes such as gear transmission, and it will not be described in detail herein.

In some embodiments, referring to FIG. 13 to FIG. 15, the rotatable locking structure is provided between the fixed seat 10 and each scanning station 21. An accommodating hole 11 is provided in an upper surface of the fixed seat 10, an elastic positioning piece 12 capable of stretching out and drawing back along the axial direction of bearing table 20 is provided in the accommodating hole 11, a corresponding recessed hole 211 which allows the elastic positioning piece 12 to extend in is respectively provided in the end face, close to the fixed seat 10, of each scanning station 21. When the elastic positioning piece 12 is in a compressed state, the bearing table 20 can rotate relative to the fixed seat 10, when rotating to a set position, the elastic positioning piece 12 is matched with one of the recessed holes 211 to achieve positioning, at the moment, the elastic positioning piece 12 is in a free state, and the bearing table 20 is locked relative to the fixed seat 10. It will be appreciated that the rotatable locking structure is merely exemplary, the rotatable locking structure may be reversely arranged between the fixed seat 10 and each scanning station 21, and it will not be described in detail herein. In some embodiments, the elastic positioning piece 12 is a spring bead.

In order to enable the rotating process of the bearing table 20 to be more stable, in some embodiments, the rotating shaft 35 is sleeved with a bearing 36 and the number of the bearing 36 is one or two. Specially, when two bearings 36 are arranged, the structure is more stable, and the rotating shaft 35 is not prone to shaking or swinging in the rotating process.

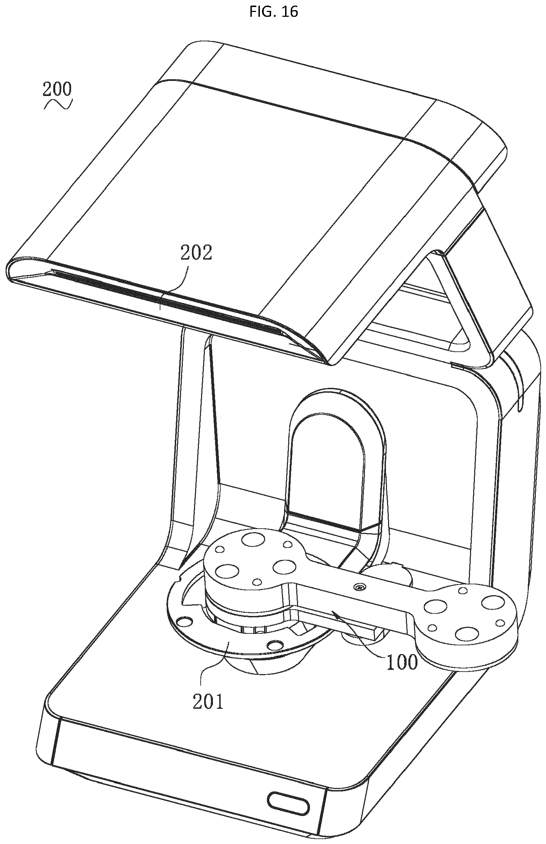

Referring to FIG. 16, a schematic diagram illustrating a denture three-dimensional scanner 200 provided by some embodiments is shown, the scanning device 202 is positioned above the storage table 201, the bearing table 20 may drive each scanning station 21 to rotate relative to the storage table 201, and the rotating angle may be controlled by the controller to be 180°, 360 degrees°, 90 ° or other degrees.

In the rotating process of the bearing table 20, the scanned denture model may be replaced in time, uninterrupted scanning work is achieved, the scanning efficiency may be remarkably improved, and the time for replacing the denture model is saved.

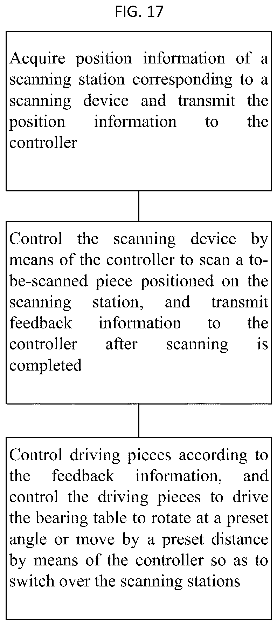

Referring to FIG. 17, a schematic diagram illustrating a control method of the denture three-dimensional scanner 200 provided by some embodiments is shown, and the control method includes the following steps:
acquiring position information of the scanning station 21 corresponding to the scanning device 202 and transmitting position information to the controller;
controlling the scanning device 202 by the controller to scan the to-be-scanned piece positioned on the scanning station 21, and transmitting feedback information to the controller after scanning is completed; and
controlling the first driving piece 31 and/or the second driving piece 41 according to feedback information, and controlling the first driving piece 31 to drive the bearing table 20 to rotate at a preset angle or control the second driving piece 41 to drive the bearing table 20 to move by a preset distance by the controller so as to switch over the scanning stations 21.

## Claims

1. A denture bearing mechanism, comprising a fixed seat (10), a bearing table (20) and driving assemblies (30, 40), wherein the fixed seat (10) is detachably mounted on a storage table (201) of a denture three-dimensional scanner (200), the bearing table (20) is arranged on the fixed seat (10) and connected to the driving assemblies (30, 40), the driving assemblies (30, 40) are used for driving the bearing table (20) to move relative to the fixed seat (10), and the bearing table (20) is provided with at least two scanning stations (21) used for placing denture models;
wherein the driving assemblies comprise a second driving assembly (40), and the second driving assembly (40) is configured to drive the bearing table (20) to horizontally move in a reciprocation manner relative to the fixed seat (10), so as to adjust a position of each of the at least two scanning stations (21);
the second driving assembly (40) comprises a second driving piece (41), a lead screw (42) and a nut (43), wherein the second driving piece (41) is connected with the lead screw (42), and the nut (43) penetrates out of the lead screw (42) and is fixed to the bearing table (20);
a first limiting switch (51) and a second limiting switch (52) are respectively provided at two ends of the fixed seat (10), the first limiting switch (51) and the second limiting switch (52) are respectively electrically connected with the second driving assembly (40), and a photoelectric blocking plate (53) is fixed on the nut (43).

2. The denture bearing mechanism according to claim 1, wherein the driving assemblies comprise a first driving assembly (30), and the first driving assembly (30) is capable of driving the bearing table (20) to rotate relative to the fixed seat (10), so as to adjust a position of each of the at least two scanning stations (21).

3. The denture bearing mechanism according to claim 2, wherein the at least two scanning stations (21) are respectively distributed at intervals in a circumferential direction along a rotating axis of the bearing table (20).

4. The denture bearing mechanism according to claim 3, wherein a rotatable locking structure is provided between the fixed seat (10) and each scanning station (21).

5. The denture bearing mechanism according to claim 4, wherein the rotatable locking structure comprises an elastic positioning piece (12) and a recessed hole (211), wherein the elastic positioning piece (12) is axially telescopically located on one of the fixed seat (10) and the at least two scanning stations (21), the recessed hole (211) is correspondingly provided in the other one of the fixed seat (10) and the at least two scanning stations (21), when the elastic positioning piece (12) is in an elongated state and located in the recessed hole (211), the scanning stations (21) and the fixed seat (10) are locked, when the elastic positioning piece (12) is in a compressed state and separated from the recessed hole (211), locking is released, and the scanning stations (21) is rotatable relative to the fixed seat (10).

6. The denture bearing mechanism according to claim 2, wherein the first driving assembly (30) comprises a first driving piece (31), a first transmission wheel (32), a second transmission wheel (33), a transmission belt (34) and a rotating shaft (35), the first driving piece (31) is connected with the first transmission wheel (32), the transmission belt (34) is connected between the first transmission wheel (32) and the second transmission wheel (33), the second transmission wheel (33) is in a transmission connection to the bearing table (20) through the rotating shaft (35), and the rotating shaft (35) is sleeved with a bearing (36) and a number of the bearing (36) is one or two.

7. The denture bearing mechanism according to claim 1, wherein the at least two scanning stations (21) are distributed at intervals in a horizontal movement direction.

8. The denture bearing mechanism according to claim 1, wherein an electric contact assembly (13) is provided in the fixed seat (10), and the driving assemblies (30, 40) are electrically connected to an external controller through the electric contact assembly (13), so that each scanning station (21) is subjected to switching control.

9. The denture bearing mechanism according to any one of claims 1-8, wherein an end face, which is away from the fixed seat (10), of each scanning station (21) is connected with an external denture base in a concave-convex matching and/or magnetic attraction manner; or
a side face of each scanning station (21) is provided with a guide groove (212) or a guide rib which is matched with an external denture base rib groove; or
an end face, which is away from the fixed seat (10), of each scanning station (21) is connected with an external denture base in a concave-convex matching and/or magnetic attraction manner; and a side face of each scanning station (21) is provided with a guide groove (212) or a guide rib matched with an external denture base rib groove.

10. A denture three-dimensional scanner, comprising a storage table (201), a controller and a scanning device (202) arranged above the storage table (201), and further comprising the denture bearing mechanism (100) according to any one of claims 1-9, wherein the fixed seat (10) of the denture bearing mechanism (100) are detachably mounted on the storage table (201), the bearing table (20) is arranged on the fixed seat (10) and is provided with the at least two scanning stations (21) used for placing denture models, an electric contact assembly (13) is provided in the fixed seat (10), the driving assemblies (30, 40) are electrically connected to the controller through the electric contact assembly (13), so that each scanning station (21) is subjected to switching control.

11. A control method of a denture three-dimensional scanner, applied to the denture three-dimensional scanner (200) according to claim 10, and comprising following steps:
acquiring position information of a scanning station (21) corresponding to the scanning device (202) and transmitting position information to the controller;
controlling the scanning device (202) by the controller to scan a to-be-scanned piece on the scanning station (21), and transmitting feedback information to the controller after scanning is completed; and
controlling driving pieces (31, 41) according to feedback information, and controlling the driving pieces (31, 41) to drive the bearing table (20) to rotate at a preset angle or move by a preset distance by the controller, so as to switch over the scanning stations (21).

## Patentansprüche

1. Tragemechanismus für Zahnersatz, der eine stationäre Aufnahme (10), einen Tragetisch (20) sowie Antriebsanordnungen (30, 40) umfasst, wobei die stationäre Aufnahme (10) abnehmbar an einem Aufbewahrungstisch (201) eines 3D-Scanners für Zahnersatz (200) angebracht ist, der Tragetisch (20) an der stationären Aufnahme (10) angeordnet und mit den Antriebsanordnungen (30, 40) verbunden ist, die Antriebsanordnungen (30, 40) dazu dienen, den Tragetisch (20) so anzutreiben, dass er sich relativ zu der stationären Aufnahme (10) bewegt, und der Tragetisch (20) mit wenigstens zwei Scan-Stationen (21) versehen ist, die zum Auflegen von Zahnersatz-Modellen dienen;
wobei die Antriebsanordnungen eine zweite Antriebsanordnung (40) umfassen und die zweite Antriebsanordnung (40) so ausgeführt ist, dass sie den Tragetisch (20) so antreibt, dass er sich relativ zu der stationären Aufnahme (10) horizontal hin- und herbewegt, um eine Position jeder der wenigstens zwei Scan-Stationen (21) einzustellen;
die zweite Antriebsanordnung (40) ein zweites Antriebsteil (41), eine Gewindespindel (42) sowie eine Mutter (43) umfasst, wobei das zweite Antriebsteil (41) mit der Gewindespindel (42) verbunden ist und die Mutter (43) aus der Gewindespindel (42) herausragt und an dem Tragetisch (20) befestigt ist;
ein erster Grenzschalter (51) sowie ein zweiter Grenzschalter (52) jeweils an zwei Enden der stationären Aufnahme (10) vorhanden sind und der erste Grenzschalter (51) sowie der zweite Grenzschalter (52) jeweils elektrisch mit der zweiten Antriebsanordnung (40) verbunden sind, und eine photoelektrische Sperrplatte (53) an der Mutter (43) befestigt ist.

2. Tragemechanismus für Zahnersatz nach Anspruch 1, wobei die Antriebsanordnungen eine erste Antriebsanordnung (30) umfassen und die erste Antriebsanordnung (30) in der Lage ist, den Tragetisch (20) so anzutreiben, dass er sich relativ zu der stationären Aufnahme (10) dreht, um eine Position jeder der wenigstens zwei Scan-Stationen (21) einzustellen.

3. Tragemechanismus für Zahnersatz nach Anspruch 2, wobei die wenigstens zwei Scan-Stationen (21) jeweils in einer Umfangsrichtung entlang einer Drehachse des Tragetischs (20) in Abständen verteilt sind.

4. Tragemechanismus für Zahnersatz nach Anspruch 3, wobei zwischen der stationären Aufnahme (10) und jeder Scan-Station (21) eine drehbare Arretierstruktur vorhanden ist.

5. Tragemechanismus für Zahnersatz nach Anspruch 4, wobei die drehbare Arretierstruktur ein elastisches Positionierteil (12) sowie ein vertieftes Loch (211) umfasst, das elastische Positionierteil (12) axial teleskopisch an der stationären Aufnahme (10) oder den wenigstens zwei Scan-Stationen (21) angeordnet ist, das vertiefte Loch (211) in Entsprechung dazu in dem anderen Element von der stationären Aufnahme (10) und den wenigstens zwei Scan-Stationen (21) vorhanden ist, wenn das elastische Positionierteil (12) einen gedehnten Zustand einnimmt und sich in dem vertieften Loch (211) befindet, die Scan-Stationen (21) und die stationäre Aufnahme (10) arretiert sind, wenn das elastische Positionierteil (12) einen zusammengedrückten Zustand einnimmt und aus dem vertieften Loch (211) entfernt ist, die Arretierung gelöst ist und die Scan-Stationen (21) relativ zu der stationären Aufnahme (10) gedreht werden können.

6. Tragemechanismus für Zahnersatz nach Anspruch 2, wobei die erste Antriebsanordnung (30) ein erstes Antriebsteil (31), ein erstes Übertragungsrad (32), ein zweites Übertragungsrad (32) einen Übertragungsriemen (34) sowie eine Drehwelle (35) umfasst, wobei das erste Antriebsteil (31) mit dem ersten Übertragungsrad (32) verbunden ist, der Übertragungsriemen (34) das erste Übertragungsrad (32) und das zweite Übertragungsrad (33) verbindet, das zweite Übertragungsrad (33) über die Drehwelle (35) in einer Übertragungsverbindung mit dem Tragetisch (20) ist, auf die Drehwelle (35) ein Lager (36) aufgeschoben ist und ein oder zwei Lager (36) vorhanden ist/sind.

7. Tragemechanismus für Zahnersatz nach Anspruch 1, wobei die wenigstens zwei Scan-Stationen (21) in einer Richtung horizontaler Bewegung in Abständen verteilt sind.

8. Tragemechanismus für Zahnersatz nach Anspruch 1, wobei eine elektrische Kontaktbaugruppe (13) in der stationären Aufnahme (10) vorhanden ist und die Antriebsanordnungen (30, 40) über die elektrische Kontaktbaugruppe (13) elektrisch so mit einer externen Steuerungseinrichtung verbunden sind, dass jede Scan-Station (21) Schaltsteuerung unterzogen wird.

9. Tragemechanismus für Zahnersatz nach einem der Ansprüche 1 - 8, wobei eine Endfläche jeder Scan-Station (21), die von der stationären Aufnahme (10) entfernt ist, mit einer externen Zahnersatz-Basis in einer konkav-konvexen Passung und/oder über magnetische Anziehung verbunden ist; oder
eine Seitenfläche jeder Scan-Station (21) mit einer Führungsnut (212) oder einer Führungsrippe versehen ist, die mit einer Rippen-Nut der externen Zahnersatz-Basis in Passung ist; oder
eine Endfläche jeder Scan-Station (21), die von der stationären Aufnahme (10) entfernt ist, mit einer externen Zahnersatz-Basis in einer konkav-konvexen Passung und/oder über magnetische Anziehung verbunden ist; und eine Seitenfläche jeder Scan-Station (21) mit einer Führungsnut (212) oder einer Führungsrippe versehen ist, die mit einer Rippen-Nut der externen Zahnersatz-Basis in Passung ist.

10. 3D-Scanner für Zahnersatz, der einen Aufbewahrungstisch (201), eine Steuerungseinrichtung sowie eine über dem Aufbewahrungstisch (201) angeordnete Scan-Vorrichtung (202) umfasst, und des Weiteren den Tragemechanismus (100) für Zahnersatz nach einem der Ansprüche 1 - 9 umfasst, wobei die stationäre Aufnahme (10) des Tragemechanismus (100) für Zahnersatz abnehmbar an dem Aufbewahrungstisch (201) angebracht ist, der Tragetisch (20) an der stationären Aufnahme (10) angeordnet ist und mit den wenigstens zwei Scan-Stationen (21) versehen ist, die zum Auflegen von Zahnersatz-Modellen dienen, eine elektrische Kontaktbaugruppe (13) in der stationären Aufnahme (10) vorhanden ist, die Antriebsanordnungen (30, 40) über die elektrische Kontaktbaugruppe (13) elektrisch so mit der Steuerungseinrichtung verbunden sind, dass jede Scan-Station (21) Schaltsteuerung unterzogen wird.

11. Verfahren zum Steuern eines 3D-Scanners für Zahnersatz, das bei dem 3D-Scanner (200) für Zahnersatz nach Anspruch 10 angewendet wird und die folgenden Schritte umfasst:
Erfassen von Positions-Informationen einer Scan-Station (21), die der Scan-Vorrichtung (202) entspricht, und Übertragen von Positions-Informationen zu der Steuerungseinrichtung;
Steuern der Abtastvorrichtung (202) mittels der Steuerungseinrichtung, um ein zu scannendes Teil an der Scan-Station (21) zu scannen, und Übertragen von Rückmelde-Informationen zu der Steuerungseinrichtung, nachdem das Scannen abgeschlossen ist; sowie
Steuern von Antriebsteilen (31, 41) entsprechend der Rückmelde-Informationen und Steuern der Antriebsteile (31, 41) mittels der Steuerungseinrichtung, um den Tragetisch (20) um einen voreingestellten Winkel zu drehen oder um eine voreingestellte Strecke zu bewegen und so die Scan-Stationen (21) zu schalten.

## Revendications

1. Mécanisme de support de prothèse dentaire, comprenant une assise fixe (10), une table de support (20) et des ensembles d'entraînement (30, 40), l'assise fixe (10) étant montée de manière à pouvoir être détachée sur une table de stockage (201) d'un scanner tridimensionnel de prothèse dentaire (200), la table de support (20) étant agencée sur l'assise fixe (10) et raccordée aux ensembles d'entraînement (30, 40), les ensembles d'entraînement (30, 40) étant utilisés pour amener la table de support (20) à se déplacer par rapport à l'assise fixe (10), et la table de support (20) étant pourvue d'au moins deux postes de balayage (21) utilisés pour placer les modèles de prothèse dentaire ;
les ensembles d'entraînement comprenant un second ensemble d'entraînement (40), et le second ensemble d'entraînement (40) étant conçu pour amener la table de support (20) à se déplacer horizontalement d'une manière réciproque par rapport à l'assise fixe (10), afin d'ajuster une position de chacun des au moins deux postes de balayage (21) ;
le second ensemble d'entraînement (40) comprenant un second élément d'entraînement (41), une vis motrice (42) et un écrou (43), le second élément d'entraînement (41) étant raccordé à la vis motrice (42), et l'écrou (43) pénétrant hors de la vis motrice (42) et étant fixé à la table de support (20) ;
un premier commutateur de restriction (51) et un second commutateur de restriction (52) étant respectivement prévus aux deux extrémités de l'assise fixe (10), le premier commutateur de restriction (51) et le second commutateur de restriction (52) étant respectivement électriquement raccordés au second ensemble d'entraînement (40), et une plaque de blocage photoélectrique (53) étant fixée sur l'écrou (43).

2. Mécanisme de support de prothèse dentaire selon la revendication 1, les ensembles d'entraînement comprenant un premier ensemble d'entraînement (30), et le premier ensemble d'entraînement (30) étant capable d'entraîner la table de support (20) à tourner par rapport à l'assise fixe (10), afin d'ajuster une position de chacun des au moins deux postes de balayage (21).

3. Mécanisme de support de prothèse dentaire selon la revendication 2, les au moins deux postes de balayage (21) étant respectivement répartis sous des intervalles dans un sens de la circonférence le long d'un axe de rotation de la table de support (20).

4. Mécanisme de support de prothèse dentaire selon la revendication 3, une structure de verrouillage rotative étant prévue entre l'assise fixe (10) et chaque poste de balayage (21) .

5. Mécanisme de support de prothèse dentaire selon la revendication 4, la structure de verrouillage rotative comprenant un élément de positionnement élastique (12) et un trou renfoncé (211), l'élément de positionnement élastique (12) étant axialement localisé de manière télescopique sur l'un de l'assise fixe (10) et des au moins deux postes de balayage (21), le trou renfoncé (211) étant prévu en correspondance dans l'autre de l'assise fixe (10) et les au moins deux postes de balayage (21), lorsque l'élément de positionnement élastique (12) se trouve sous un état allongé et localisé dans le trou renfoncé (211), les postes de balayage (21) et l'assise fixe (10) étant verrouillés, lorsque l'élément de positionnement élastique (12) se trouve sous un état comprimé et séparé du trou renfoncé (211), le verrouillage est libéré, et les postes de balayage (21) peuvent tourner par rapport à l'assise fixe (10).

6. Mécanisme de support de prothèse dentaire selon la revendication 2, le premier ensemble d'entraînement (30) comprenant un premier élément d'entraînement (31), une première roue de transmission (32), une seconde roue de transmission (33), une courroie de transmission (34) et un arbre rotatif (35), le premier élément d'entraînement (31) étant raccordé à la première roue de transmission (32), la courroie de transmission (34) étant raccordée entre la première roue de transmission (32) et la seconde roue de transmission (33), la seconde roue de transmission (33) se trouvant dans un raccord de transmission par rapport à la table de support (20) à travers l'arbre rotatif (35), et l'arbre rotatif (35) étant emmanché avec un roulement (36) et un nombre de roulement (36) étant de un ou deux.

7. Mécanisme de support de prothèse dentaire selon la revendication 1, les au moins deux postes de balayage (21) étant répartis sous des intervalles dans un sens de mouvement horizontal.

8. Mécanisme de support de prothèse dentaire selon la revendication 1, un ensemble de contact électrique (13) étant prévu dans l'assise fixe (10), et les ensembles d'entraînement (30, 40) étant électriquement raccordés à un dispositif de commande externe à travers l'ensemble de contact électrique (13), de sorte que chaque poste de balayage (21) est soumis à une commande de commutation.

9. Mécanisme de support de prothèse dentaire selon l'une quelconque des revendications 1 à 8, une face d'extrémité, qui est opposée à l'assise fixe (10), de chaque poste de balayage (21) étant raccordée à une base de prothèse dentaire externe par correspondance concave-convexe et/ou par attraction magnétique ; ou
une face latérale de chaque poste de balayage (21) étant pourvue d'une rainure de guidage (212) ou d'une nervure de guidage qui correspond à une rainure de nervure de base de prothèse dentaire externe ; ou
une face d'extrémité, qui est opposée à l'assise fixe (10), de chaque poste de balayage (21) étant raccordée à une base de prothèse dentaire externe par correspondance concave-convexe et/ou par attraction magnétique ; et une face latérale de chaque poste de balayage (21) étant pourvue d'une rainure de guidage (212) ou d'une nervure de guidage qui correspond à une rainure de nervure de base de prothèse dentaire externe.

10. Scanner tridimensionnel de prothèse dentaire, comprenant une table de stockage (201), un dispositif de commande et un dispositif de balayage (202) disposés au-dessus de la table de stockage (201), et comprenant en outre le mécanisme de support de prothèse dentaire (100) selon l'une quelconque des revendications 1 à 9, l'assise fixe (10) du mécanisme de support de prothèse dentaire (100) étant montée de manière à pouvoir être détachée sur la table de stockage (201), la table de support (20) étant disposée sur l'assise fixe (10) et étant pourvue des au moins deux postes de balayage (21) utilisés pour mettre en place les modèles de prothèse dentaire, un ensemble de contact électrique (13) étant prévu dans l'assise fixe (10), les ensembles d'entraînement (30, 40) étant électriquement raccordés au dispositif de commande à travers l'ensemble de contact électrique (13), de sorte que chaque poste de balayage (21) est soumis à une commande de commutation.

11. Procédé de commande d'un scanner tridimensionnel de prothèse dentaire, appliqué au scanner tridimensionnel de prothèse dentaire (200) selon la revendication 10, et comprenant les étapes suivantes :
d'acquisition d'informations de position d'un poste de balayage (21) correspondant au dispositif de balayage (202) et de transmission d'informations de position au dispositif de commande ;
de commande du dispositif de balayage (202) par le dispositif de commande afin de balayer une pièce à scanner sur le poste de balayage (21), et de transmission d'informations de rétroaction au dispositif de commande après le balayage étant achevée ; et
de commande des éléments d'entraînement (31, 41) en fonction d'informations de rétroaction, et de commande d'éléments d'entraînement (31, 41) pour amener la table de support (20) à tourner sous un angle prédéfini ou à se déplacer d'une distance prédéfinie par le dispositif de commande, afin de passer aux postes de balayage (21).
